# FASCICULE DE BREVET EUROPEEN

(11) **EP 1 308 602 B1**
(45) Date de publication et mention de la délivrance du brevet: **04.08.2004**
(21) Numéro de dépôt: 02292635.6
(22) Date de dépôt: 24.10.2002
(51) Int. Cl.: F01D 21/04

(54) **Système d'accouplement cassable pour l'arbre soufflante de turboréacteur**
Brechbare Kupplungssysteme für die Fanwelle eines Turbotriebwerks
Breakable coupling system for the fan shaft of a turbomachine engine

(30) Priorité: 14.03.2002 FR 0203150; 31.10.2001 FR 0114099
(43) Date de publication de la demande: 07.05.2003
(73) Titulaire: Snecma Moteurs, 75015 Paris (FR)
(72) Inventeur: Bouchy, Gael, 77540 La Chapelle Iger (FR); Heurtel, Bertrand, Jean Joseph, Marie, 77240 Vert Saint-Denis (FR); Pandelakis, Pierre, 77000 Melun (FR); Morel, Patrick, 77590 Chartrettes (FR); Masson, Eric, Jean, 77820 Le Chatelet en Brie (FR); Rakotodrainibe, Bien-Aimé, 77630 Arbonne La Forêt (FR); Martin, Daniel, 77720 Bombon (FR); Souyeaux, Henry, 91330 Yerres (FR)

(56) Documents cités:
- EP-A- 1 008 726
- FR-A- 2 752 024
- US-A- 3 395 857
- US-A- 5 417 501
- US-A- 6 009 701
- US-A- 6 098 399

## Description

L'invention concerne un support d'arbre cassant à l'apparition d'un balourd.

Elle concerne plus précisément un agencement d'arbre tournant portant un équipement à un bout et s'étendant en arrière à partir de l'équipement, l'arbre étant soutenu par un premier palier en arrière de l'équipement et par un deuxième palier en arrière du premier palier, le premier palier étant porté par une enveloppe entourant l'arbre et s'étendant en arrière du premier palier jusqu'à une structure de stator, à laquelle l'enveloppe est bridée par des vis parallèles à l'arbre et fusibles en traction.

Un tel agencement est décrit dans FR 2 752 024. L'équipement est par exemple une soufflante de turboréacteur entraînée et supportée par l'arbre d'une turbine à basse pression.

Si une aube de la soufflante se rompt, un balourd important se produit sur l'arbre de support de la soufflante, ce qui génère des charges cycliques et des vibrations que le premier palier de support de l'arbre communique aux parties fixes de la machine avec d'importants risques de détériorations. La rupture des vis fusibles en traction entraîne un découplage de l'enveloppe au bout d'un nombre restreint de tours de rotation de l'arbre, dès la présence d'un balourd important, dû par exemple à la rupture d'une aube de soufflante.

Dès le découplage de l'enveloppe, le premier palier ne soutient plus la soufflante, et l'arbre de soufflante n'est plus soutenu que par le deuxième palier qui se met à son tour à transmettre les charges cycliques et les vibrations à la structure de stator via son support.

FR 2 752 024 prévoit un mode de réalisation dans lequel le support annulaire du deuxième palier est relié à l'enveloppe de support du premier palier. Dans le cas de rupture des vis fusibles en traction, l'extrémité avant de la ligne d'arbre à basse pression devient flottante, et peut osciller assez fortement en direction radiale et éventuellement frotter sur la ligne d'arbre à haute pression qui lui est coaxiale et tourne à une vitesse nettement supérieure, ce qui peut entraîner des dommages pour les deux lignes d'arbres.

FR 2 752 024 a également prévu de limiter les débattements de la ligne d'arbre à basse pression après la rupture des vis fusibles en traction, en montant une nervure sur le stator autour de l'enveloppe pour contenir son mouvement, ou une autre nervure fixée au stator, et terminée par des patins situés à l'arrière du deuxième palier et entourant la ligne d'arbre à basse pression à peu de distance d'elle. Lorsque le débattement de l'arbre à basse pression est limité par les patins de l'autre nervure, situés à peu de distance de l'arbre, il se produit évidemment un frottement entre l'arbre à basse pression et les patins qui peut endommager l'arbre à basse pression.

Le but de l'invention est de proposer un agencement d'arbre tel que défini en introduction, qui pallie les inconvénients mentionnés ci-dessus.

En outre, on connaît par US-A-6 098 399 un palier disposé avec un jeu radial dans un alésage d'un support annulaire solidaire de la structure de stator et bridé audit support annulaire par des vis parallèles à l'arbre et fusibles en cisaillement, grâce à quoi le deuxième palier est susceptible de prendre appui sur ledit support annulaire en cas de rupture desdites vis et le jeu radial est calibré de manière à éviter des frottements entre l'arbre et d'autres éléments fixes ou mobiles et le deuxième palier comporte une bague extérieure qui présente une bride annulaire radiale dirigée vers l'extérieur et maintenue en appui contre une face latérale du support annulaire par les vis fusibles et la bague extérieure est maintenue centrée dans l'alésage du support annulaire par une pluralité d'ergots parallèles à l'arbre, lesdits ergots étant calibrés pour être cisaillés lors du découplage du palier.

Selon l'invention, des ergots sont prévus de préférence sur le support annulaire et s'étendent à la périphérique de la bride.

Selon une autre caractéristique avantageuse de l'invention, il est prévu des moyens pour empêcher la rotation de la bague extérieure en cas de découplage du deuxième palier.

Avantageusement, les moyens pour empêcher la rotation de la bague extérieure comporte au moins une broche, et de préférence trois broches, ancrée dans le support annulaire et traversant avec jeu un orifice ménagé dans la bride.

Très avantageusement, la broche comporte une tête de broche en appui sur la face extérieure de la bride, afin d'empêcher un déplacement axial du deuxième palier en cas de découplage de ce deuxième palier.

Ainsi, en cas de découplage, la bague extérieure viendra en appui contre la périphérie de l'alésage, et sera empêchée de tourner par les broches qui en outre immobilisent axialement la bague extérieure du deuxième palier.

D'autres avantages et caractéristiques de l'invention ressortiront à la lecture de la description suivante faite à titre d'exemple non limitatif et en référence aux dessins annexés dans lesquels :
la figure 1 est une vue générale de l'invention ;
la figure 2 montre à plus grande échelle le montage du palier arrière de l'arbre ;
la figure 3 est une vue frontale de la bague extérieure selon un mode de réalisation préféré de l'invention ; et
la figure 4 montre, également à grande échelle, le montage du palier arrière de l'arbre, selon une coupe prise selon la ligne IV-IV de la figure 3.

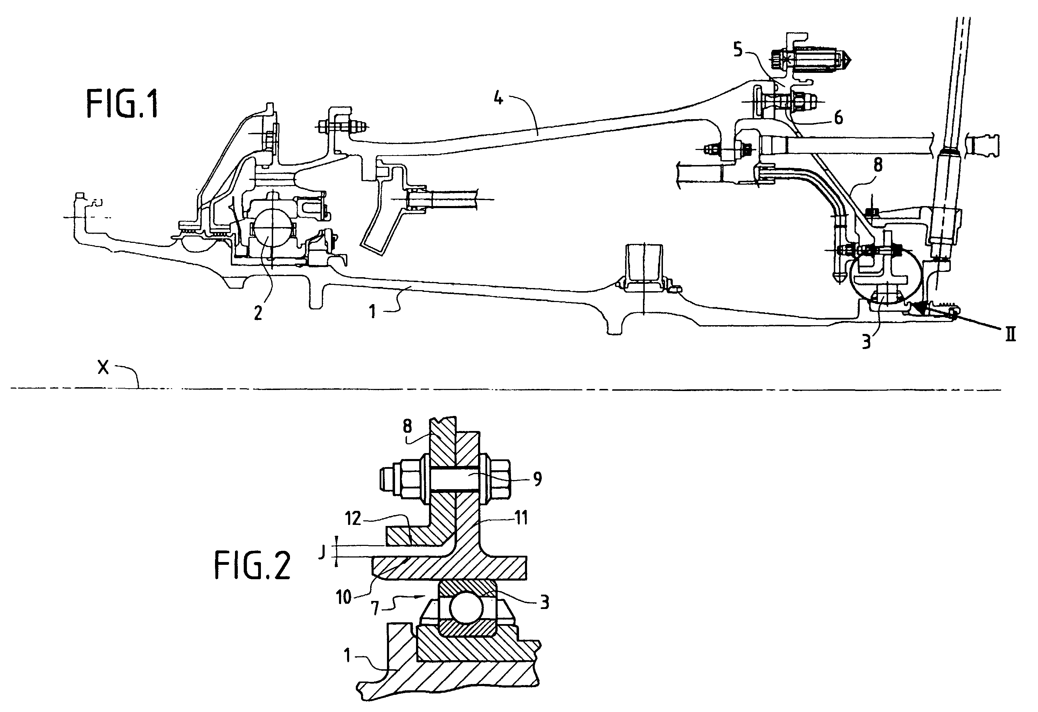

la figure 1 montre l'extrémité avant d'un arbre 1 d'une turbine à basse pression d'un turboréacteur à double flux d'axe X, qui est supportée par un palier avant 2 et par un palier arrière 3. Cet arbre 1 supporte en porte à faux à l'avant du palier avant 2 une soufflante d'axe X non montrée sur les dessins, et est supporté à l'arrière par un troisième palier non montré sur les dessins.

Le palier avant 2 est porté par une enveloppe 4 qui entoure l'arbre 1 et qui s'étend en arrière du palier avant 2 jusqu'à une structure de stator 5, sur laquelle elle est unie par une pluralité de vis 6, disposées parallèlement à l'axe X et qui sont fusibles en traction. Ces vis 6 comportent une portion médiane de section réduite qui se rompt lorsque le palier avant 2 subit des charges cycliques en cas de présence d'un balourd par suite de la rupture ou de la déformation importante d'une aube de soufflante.

Le palier arrière 3 est disposé dans un alésage 7 d'axe X d'un support 8 rigide, fixé à la structure de stator 5, ou intégré dans la structure de stator 5, et est bridé sur ce support 8 au moyen de vis 9 d'axe X susceptibles de se rompre par cisaillement, lorsque le palier arrière 3 est soumis à des charges cycliques importantes.

Ainsi que cela est montré sur la figure 2, l'alésage 7 du support 8 a un diamètre supérieur au diamètre externe de l'élément périphérique externe 10 du palier arrière 3, et cet élément périphérique externe 10 présente une bride annulaire radiale 11 dirigée vers l'extérieur et qui est en appui contre une face latérale du support 8 grâce aux vis 9.

Il existe ainsi un jeu radial J entre la paroi périphérique externe 10 et la paroi radialement interne 12 du support 8 qui délimite l'alésage 7.

En cas de rupture des vis 9 par cisaillement, le débattement radial du palier arrière 3 est délimité par le jeu radial J, la paroi périphérique externe 10 du palier arrière 3 étant alors en appui contre la paroi radialement interne 12 du support 8.

Lorsque la soufflante crée un balourd important, le palier avant 2 subit des charges cycliques, qui sont compensées par des efforts axiaux sur les vis 6 fusibles en traction qui se rompent les uns après les autres au bout d'un très petit nombre de tours de rotation de l'arbre 1. Le palier avant 2 ne porte plus la soufflante, et le palier arrière 3 subit à son tour des charges cycliques qui peuvent entraîner la rupture par cisaillement des vis 9 fusibles en cisaillement. Mais le palier arrière 3 est maintenu en appui radial contre la paroi radialement interne 12 du support 8.

Le jeu J est calibré de telle manière que l'arbre 1 de la turbine à basse pression ne frotte pas contre des éléments fixes ou mobiles du turboréacteur et notamment contre l'arbre à haute pression qui relie la turbine à haute pression au compresseur à haute pression, qui est coaxial et extérieur à l'arbre 1 à basse pression, et qui tourne à une vitesse nettement supérieure.

Le jeu J sera limité par exemple à 4 mm et de préférence à 3 mm, afin de diminuer très fortement les risques de contact entre les arbres à haut régime du turboréacteur, et de diminuer les efforts à bas régime.

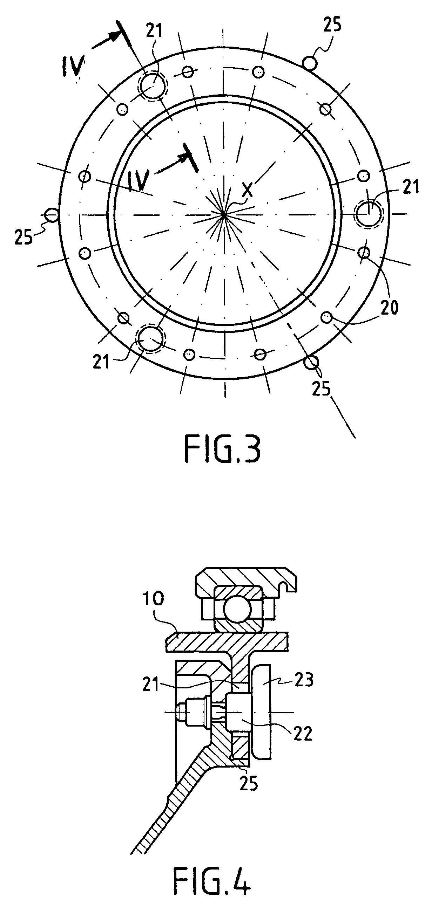

Ainsi que cela est montré sur la figure 3, la bride annulaire radiale 11 de l'élément périphérique 10 qui constitue en réalité la bague extérieure du roulement du deuxième palier 3, comporte une pluralité d'alésages 20, au nombre de 12 par exemple, pour le passage des vis fusibles 9. La bride 11 comporte en outre trois orifices traversant 21, de préférence circulaires, répartis régulièrement autour de l'axe X de l'arbre. Ces orifices 21 sont destinés à loger avec un jeu approprié des broches 22 ancrées dans le support annulaire 8 ainsi que cela est montré sur la figure 4, afin d'empêcher la rotation de la bague extérieure 10 en cas de découplage du deuxième palier 3, tout en permettant à la bague extérieure 10 de prendre appui sur la paroi radialement interne 12 du support 8. Chaque broche 22 comporte à son extrémité libre une tête de broche 23 qui est en léger appui sur la face frontale externe de la bride annulaire 11, afin d'empêcher le déplacement axial du deuxième palier 3, tout en permettant le débattement radial de ce deuxième palier 3.

La référence 25 désigne un ergot solidaire du support annulaire 8 et qui s'étend à la périphérie de la bride 11. De préférence, le support annulaire 8 comporte trois ergots 25 régulièrement répartis à la périphérie de la bride, et qui sont destinés à centrer la bague extérieure 10 dans l'alésage 7 lors du montage. Ces ergots 25 sont calibrés de telle manière qu'ils soient cisaillés après le cisaillement des vis fusibles 9, dès la présence du balourd.

## Revendications

1. Agencement d'arbre tournant portant un équipement à un bout et s'étendant en arrière à partir de l'équipement, l'arbre (1) étant soutenu par un premier palier (2) en arrière de l'équipement et par un deuxième palier (3) en arrière du premier palier (2), le premier palier (2) étant porté par une enveloppe (4) entourant l'arbre (1) et s'étendant en arrière du premier palier (2) jusqu'à une structure de stator (5), à laquelle l'enveloppe (4) est bridée par des vis (6) parallèles à l'arbre (1) et fusibles en traction,
dans lequel le deuxième palier (3) est disposé avec un jeu radial (J) dans un alésage (7) d'un support annulaire (8) solidaire de la structure de stator (5) et est bridé audit support (8) annulaire par des vis (9) parallèles à l'arbre (1) et fusibles en cisaillement, grâce à quoi le deuxième palier (3) est susceptible de prendre appui sur ledit support (8) en cas de rupture desdites vis (9) et
le deuxième palier (3) comporte une bague extérieure (10) qui présente une bride annulaire radiale (11) dirigée vers l'extérieur et maintenue en appui contre une face latérale du support annulaire (8) par les vis (9) fusibles et
la bague extérieure (10) est maintenue centrée dans l'alésage (7) du support annulaire (8) par une pluralité d'ergots (25) parallèles à l'arbre (1), lesdits ergots étant calibrés pour être cisaillés lors du découplage du deuxième palier et les ergots sont prévus sur le support annulaire (8) et s'étendent à la périphérie de la bride (11).

2. Agencement selon la revendication 1, **caractérisé par le fait que** le support annulaire (8) comporte trois ergots régulièrement répartis autour de l'axe de l'alésage.

3. Agencement selon l'une quelconque des revendications 1 ou 2, **caractérisé par le fait qu'**il est prévu des moyens pour empêcher la rotation de la bague extérieure (10) en cas de découplage du deuxième palier (3).

4. Agencement selon la revendication 3, **caractérisé par le fait que** les moyens pour empêcher la rotation de la bague extérieure (10) en cas de découplage comportent au moins une broche (22) ancrée dans le support annulaire (8) et traversant avec jeu un orifice (21) ménagé dans la bride (11).

5. Agencement selon la revendication 4, **caractérisé par le fait que** la broche (22) comporte une tête de broche (23) en appui sur la face extérieure de la bride (11), afin d'empêcher un déplacement axial du deuxième palier (3) en cas de découplage de ce deuxième palier.

6. Agencement selon l'une quelconque des revendications 4 ou 5, **caractérisé par le fait qu'**il comporte trois broches (22) régulièrement réparties autour de l'axe de l'alésage (7).

## Claims

1. Rotating shaft arrangement carrying an equipment at one end and extending rearwards from the equipment, the shaft (1) being supported by a first bearing (2) to the rear of the equipment and by a second bearing (3) to the rear of the first bearing (2), the first bearing (2) being carried by a casing (4) surrounding the shaft (1) and extending rearwards from the first bearing (2) as far as a stator structure (5), to which the casing (4) is clamped by screws (6) parallel with the shaft (1) and which are fusible under tensile stress, **characterized in that** the second bearing (3) is disposed with radial play (J) in a bore (7) of an annular support (8) integral with the stator structure (5) and is clamped to the said annular support (8) by screws (9) parallel with the shaft (1) and which are fusible under shear stress, due to which the second bearing (3) is able to become supported on the said support (8) in the event of fracture of the said screws (9) and the second bearing (3) comprises an outer ring (10) which has a radial annular flange (11) which protrudes outwards and which is maintained bearing against a lateral face of the annular support (8) by the fusible screws (9) and the outer ring (10) is maintained centred in the bore (7) of the annular support (8) by a plurality of pins (25) parallel with the shaft (1), the said pins being calibrated such that they shear when the second bearing becomes decoupled and the pins are provided on the annular support (8) and extend at the periphery of the flange (11).

2. Arrangement according to Claim 1, **characterized in that** the annular support (8) comprises three pins regularly spaced around the axis of the bore.

3. Arrangement according to any one of Claims 1 or 2, **characterized in that** means are provided for preventing the rotation of the outer ring (10) in the event of decoupling of the second bearing (3).

4. Arrangement according to Claim 3, **characterized in that** the means for preventing the rotation of the outer ring (10) in the event of decoupling comprise at least one pin (22) anchored in the annular support (8) and traversing, with play, an orifice (21) formed in the flange (11).

5. Arrangement according to Claim 4, **characterized in that** the pin (22) comprises a pin head (23) bearing on the outer face of the flange (11) in order to prevent an axial displacement of the second bearing (3) in the event of decoupling of that second bearing.

6. Arrangement according to any one of Claims 4 or 5, **characterized in that** it comprises three pins (22) regularly spaced around the axis of the bore (7).

## Patentansprüche

1. Anordnung einer Drehwelle, auf der an einem Ende ein Ausrüstungsteil sitzt und die sich von diesem Ausrüstungsteil nach hinten erstreckt, wobei die Welle (1) von einem ersten Lager (2) hinter dem Ausrüstungsteil und von einem zweiten Lager (3) hinter dem ersten Lager (2) gehalten wird, wobei das erste Lager (2) von einem Gehäuse (4) gehalten wird, das die Welle (1) umgibt und sich hinter dem ersten Lager (2) bis zu einem Statoraufbau (5) erstreckt, an dem das Gehäuse (4) mit Schrauben (6) angeflanscht ist, die parallel zur Welle (1) verlaufen und unter Zug schmelzbar sind,
wobei das zweite Lager (3) mit radialem Spiel (J) in einer Bohrung (7) eines mit dem Statoraufbau (5) fest verbundenen, ringförmigen Trägers (8) angeordnet ist und an diesen ringförmigen Träger (8) mit Schrauben (9) angeflanscht ist, die parallel zur Welle (1) verlaufen und unter Scherbeanspruchung schmelzbar sind, wodurch das zweite Lager (3) in der Lage ist, im Falle eines Brechens dieser Schrauben (9) an diesem ringförmigen Träger (8) in Anlage zu kommen, und
das zweite Lager (3) einen Außenring (10) aufweist, der einen radialen, ringförmigen Flansch (11) aufweist, der nach außen gerichtet ist und durch die schmelzbaren Schrauben (9) in Anlage an einer Seitenfläche des ringförmigen Trägers (8) gehalten wird, und
der Außenring (10) durch mehrere parallel zur Welle (1) verlaufende Zapfen (25) in der Bohrung (7) des ringförmigen Trägers (8) zentriert gehalten wird, wobei diese Zapfen so ausgelegt sind, dass sie beim Sich Ablösen des zweiten Lagers abgeschert werden, und
diese Zapfen an dem ringförmigen Träger (8) vorgesehen sind und sich an der Umfangslinie des Flanschs (11) erstrecken.

2. Anordnung nach Anspruch 1,
**dadurch gekennzeichnet,**
**dass** der ringförmige Träger (8) drei Zapfen aufweist, die gleichmäßig auf der Umfangslinie des Flanschs verteilt angeordnet sind.

3. Anordnung nach einem der Ansprüche 1 oder 2,
**dadurch gekennzeichnet,**
**dass** Mittel zur Verhinderung der Drehbewegung des Außenrings (10) bei einem Sich Ablösen des zweiten Lagers (3) vorgesehen sind.

4. Anordnung nach Anspruch 3,
**dadurch gekennzeichnet,**
**dass** die Mittel zur Verhinderung der Drehbewegung des Außenrings (10) bei einem Sich Ablösen mindestens aus einem Bolzen (22), der in dem ringförmigen Träger (8) verankert ist und mit Spiel durch eine Öffnung (21) in dem Flansch (11) verlaufen, bestehen.

5. Anordnung nach Anspruch 4,
**dadurch gekennzeichnet,**
**dass** der Bolzen (22) einen Bolzenkopf (23) aufweist, der sich in Anlage an der Außenseite des Flanschs (11) befindet, um ein axiales Verschieben des zweiten Lagers (3) im Falle des Sich Ablösens dieses zweiten Lagers zu verhindern.

6. Anordnung nach einem der Ansprüche 4 oder 5,
**dadurch gekennzeichnet,**
**dass** sie drei Bolzen (22) aufweist, die gleichmäßig um die Achse der Bohrung (7) verteilt angeordnet sind.
